# EUROPÄISCHE PATENTSCHRIFT

(11) **EP 3 185 365 B1**
(45) Veröffentlichungstag und Bekanntmachung des Hinweises auf die Patenterteilung: **17.10.2018**
(21) Anmeldenummer: 16201841.0
(22) Anmeldetag: 02.12.2016
(51) Int. Cl.: H01R 13/10, H01R 13/53

(54) **STROMSCHIENE**
BUSBAR
RAIL D'ALIMENTATION

(30) Priorität: 23.12.2015 DE 102015226606
(43) Veröffentlichungstag der Anmeldung: 28.06.2017
(73) Patentinhaber: RITZ Instrument Transformers GmbH, 22041 Hamburg (DE)
(72) Erfinder: Bläcker, Thomas, 56276 Großmaischeid (DE); Mischkowski, Uwe, 97514 Oberaurach-Oberschleichach (DE); Meiners, Christian, 21079 Hamburg (DE)
(74) Vertreter: Glawe, Delfs, Moll

(56) Entgegenhaltungen:
- EP-A2- 2 688 153
- DE-A1- 3 515 421
- DE-B4- 19 737 426
- KR-B1- 101 013 585
- KR-B1- 101 013 587
- US-A1- 2007 293 073

## Beschreibung

Die Erfindung betrifft eine Stromschiene für Spannungen von 1 kV bis 36 kV und Stromstärken bis 2,5 kA.

Bei Umspannungs- und Schaltanlagen für Hochspannungen über 1 kV erfolgt die Verbindung der einzelnen Komponenten, wie bspw. Schaltschütze oder Transformatoren, sowie die Anbindung an die zu verbindenden Stromnetze über Kabel und Stromschienen.

Bei Kabeln für entsprechende Anwendungen handelt es sich in der Regel um eine mit einer Isolierung ummantelte, mechanisch flexible Stromleitung, die an ihren beiden Enden Stromstecker aufweist. Aufgrund des regelmäßig hohen Leistungsdurchflusses in Hochspannungsanwendungen weisen die Kabel einen großen Durchmesser auf, der in großen Biegeradien für die Kabel resultiert. In der Folge lassen sich die Kabel nicht beliebig verlegen und insbesondere bei dem Anschluss an die Komponenten einer Umspannungs- oder Schaltanlage können aufgrund des begrenzten Bauraums Probleme mit dem Anschluss auftreten. Dies gilt umso mehr als die Anschlussstellen an den Komponenten einer Umspannungs- oder Schaltanlage im Einbauzustand häufig nur schwer erreichbar sind.

Im Stand der Technik ist daher die Verwendung von Stromschienen bekannt. Bei einer Stromschiene handelt es sich um eine ggf. mit Isolierung ummantelte Stromleitung, die im Gegensatz zu Kabeln jedoch nicht flexibel, sondern vielmehr steif ist, weshalb sie regemäßig fest installiert, d.h. in ihrer Einbaulage fest montiert wird. Ähnlich wie Kabel, weisen Stromschienen aus dem Stand der Technik an ihren beiden Enden Stromstecker auf.

Stromschienen werden häufig dazu verwendet, nur schwer erreichbare Anschlüsse an Komponenten von Umspannungs- oder Schaltanlagen in besser erreichbare Bereiche zu verlegen, um dort dann Kabel anschließen zu können. Da sowohl Kabel als auch Stromschienen an den jeweiligen Enden mit Stromsteckern versehen sind, ist für die Verbindung zwischen Stromschiene und daran anzuschließendem Kabel zwingend eine Verbindungsmuffe vorzusehen. Eine entsprechende Verbindungsmuffe weist an zwei gegenüberliegenden Enden Einstecköffnungen für Stromstecker auf und stellt eine elektrische Verbindung zwischen zwei in die Einstecköffnungen eingesteckten Stromsteckern her. Das Dokument KR101013585 beschreibt eine Stromschiene mit einem Stromleiter und einer Kontaktbuchse an einen Ende des Stromleiters, wobei Stromleiter und Kontaktbuchse von einer einstückigen Isolierung umgeben sind. Auch wenn entsprechende Verbindungsmuffen in der Regel mit den darin eingeführten Stromsteckern bspw. durch Sicherungsschrauben verbunden werden, um die Stromstecker gegen Herausrutschen zu sichern, reichen diese Sicherungsschrauben nicht aus, eine Verbindungsmuffe vollständig in ihrer Einbaulage insbesondere gegenüber der Stromschiene zu sichern. In der Folge ist regelmäßig ein zusätzliches Befestigungssystem vorzusehen, an dem die Verbindungsmuffe unabhängig von den erwähnten Sicherungsschrauben befestigt ist. Das Vorsehen eines entsprechenden Befestigungssystems ist aufwendig und kostenintensiv.
Der Erfindung liegt die Aufgabe zugrunde, eine gegenüber dem Stand der Technik verbesserte Stromschiene zu schaffen.
Diese Aufgabe wird gelöst durch eine Stromschiene gemäß dem Hauptanspruch. Vorteilhafte Weiterbildungen sind Gegenstand der abhängigen Ansprüche.
Demnach betrifft die Erfindung eine Stromschiene für Spannungen von 1 kV bis 36 kV und Stromstärken bis 2,5 kA umfassend einen von einer Isolierung umgebenen starren Stromleiter mit einem ersten und einem zweiten Ende, wobei an wenigstens einem der beiden Enden der Stromschiene eine Stromschienenbuchse vorgesehen ist, die eine fest mit dem Stromleiter verbundene einseitig offene Kontaktbuchse zur Aufnahme eines Kontaktkopfes eines Kabelsteckteils und einen die Kontaktbuchse umgebenden Isolierkörper umfasst, wobei der Isolierkörper eine Öffnung zum Einführen des Kontaktkopfes des Kabelsteckteils in die Kontaktbuchse aufweist und in axialer Richtung des Stromleiters mit dessen Isolierung überlappend ist.

Die erfindungsgemäße Stromschiene weist demnach an wenigstens einem Ende eine mit der Stromschiene fest verbundene Stromschienenbuchse auf, die ein unmittelbares Einstecken eines Kabelsteckteils gestattet, weshalb auf eine aus dem Stand der Technik bekannte Verbindungsmuffe vollständig verzichtet werden kann. Indem die elektrisch leitende Kontaktbuchse der Stromschienenbuchse weiterhin fest mit dem Stromleiter der Stromschiene verbunden ist, kann auch auf ein zusätzliches Befestigungssystem verzichtet werden. Da der Stromleiter der Stromschiene starr ist, wird aufgrund der festen Verbindung die Kontaktbuchse und somit die Stromschienenbuchse nämlich bereits allein durch den Stromleiter der Stromschiene in Position gehalten.

"Starr" in Zusammenhang mit der Erfindung bedeutet, dass das betroffene Element steif und durch übliche Belastungen im Wesentlichen weder elastisch noch plastisch verformbar ist. Bei den "üblichen Belastungen" handelt es sich insbesondere um solche Belastungen, die während der Verwendung einer erfindungsgemäßen Stromschiene im Einbauzustand auftreten, bspw. durch Einstecken eines Kabels mit Kabelsteckteil in die Stromschienenbuchse und/oder die Gewichtskraft eines in die Stromschienenbuchse eingesteckten Kabels mit Kabelsteckteil. Plastische Verformungen durch die üblichen Belastungen übersteigende Verformungskräfte sind dadurch nicht ausgeschlossen und für die Anpassung einer Stromschiene an den vorgesehenen Einbauzustand sogar regelmäßig erforderlich.

Die Kontaktbuchse der Stromschienenbuchse kann durch eine Verschraubung mit wenigstens einer Schraube oder wenigstens einem Bolzen fest mit der Stromschiene verbunden werden. Es ist dabei bevorzugt, wenn die wenigstens eine Schraube bzw. der wenigstens eine Bolzen parallel zur Achse der Stromschiene angeordnet ist. In diesem Fall kann die Stromschiene an der entsprechenden Stirnseite bspw. der Anzahl der vorgesehenen Schrauben bzw. Bolzen entsprechende Anzahl Sackbohrungen mit Innengewinde aufweisen, in die jeweils eine durch die Stromschienenbuchse geführte Schraube bzw. Bolzen eingreift. Durch eine entsprechende Anordnung kann ein großflächiger Kontakt zwischen Stromschiene und Kontaktbuchse der Stromschienenbuchse sichergestellt werden, der für die Übertragung von elektrischer Leistung vorteilhaft ist.

Es ist auch möglich, dass der Stromleiter an dem Ende, an dem die Stromschienenbuchse angeordnet sein soll, ein Außengewinde aufweist, in das ein an der Kontaktbuchse vorgesehenes korrespondierendes Innengewinde eingreifen kann. Durch eine entsprechende Gewindeverbindung kann ein großflächiger Kontakt zwischen Stromleiter und Kontaktbuchse sichergestellt werden.

Es ist weiterhin möglich, dass die Kontaktbuchse einstückig mit dem Stromleiter ausgeführt ist. Ist der Außendurchmesser des Stromleiters zumindest an dem für die Stromschienenbuchse vorgesehenen Ende größer als der Außendurchmesser des Kontaktkopfes eines Kabelsteckteils, kann die Kontaktbuchse als Sacklochvertiefung an der Stirnseite des Stromleiters ausgestaltet sein. In diesem Fall entfällt eine für die Übertragung elektrischer Leistung zu berücksichtigende Verbindungsstelle zwischen Stromleiter und Kontaktbuchse.

Der Isolierkörper der Stromschienenbuchse ist vorzugsweise aus Gießharz gefertigt. Insbesondere kann die Kontaktbuchse mit dem Gießharz des Isolierkörpers derart umgossen sein, dass eine unlösbare und lufteinschlussfreie Verbindung zwischen Isolierkörper und Kontaktbuchse besteht.

Die Stromschienenbuchse weist vorzugsweise wenigstens ein Feldsteuerelement auf. Das wenigstens eine Feldsteuerelement ist mit der Kontaktbuchse elektrisch leitend verbunden und umgibt das offene Ende der Kontaktbuchse derart radial, dass es das offene Ende der Kontaktbuchse in axialer Richtung überragt. Durch ein solches Feldsteuerelement kann die Umgebung der Stromschienenbuchse von einem unerwünschten, an der Übergangsstelle vom Kontaktkopf eines Kabelsteckteils zur Kontaktbuchse mangels unmittelbar anliegender Isolierung ggf. entstehendes elektrisches Feld wirksam gesteuert werden. Ist die Kontaktbuchse als von dem Stromleiter separat ausgestaltetes Bauteil ausgeführt und mit dem Stromleiter bspw. durch Verschraubung verbunden, ist vorzugweise ein weiteres Feldsteuerelement vorgesehen, welches mit der Kontaktbuchse elektrisch leitend verbunden ist und die Kontaktbuchse derart radial umgibt, dass es den Übergang von der Kontaktbuchse zum Stromleiter in axialer Richtung überragt. Ist der Isolierkörper der Stromschienenbuchse aus Gießharz, kann das wenigstens eine Feldsteuerelement in das Gießharz eingegossen sein.

In dem die Kontaktbuchse von einem Isolierkörper umgeben ist, der mit der Isolierung des Stromleiters in axiale Richtung überlappt, ist der Übergang zwischen Stromschienenbuchse und Stromschiene bereits grundsätzlich isoliert. Durch entsprechende Dimensionierung des Isolierkörpers und/oder der Isolierung des Stromleiters kann die Isolierung in diesem Bereich für eine vorgesehene Spannung zwischen 1 kV bis 36 kV ohne weiteres angepasst werden.

Gemäß der Erfindung, ist neben geeigneter Dimensionierung zwischen der Isolierung der Stromschiene und des Isolierkörpers ein flexibler Isoliereinsatz vorgesehen, der von einem Spannelement derart unter Druck gesetzt ist, dass Lufteinschlüsse zwischen Isolierung der Stromschiene und Isoliereinsatz sowie zwischen Isolierkörper und Isoliereinsatz verhindert werden. Es entsteht so eine Edelfuge zwischen der Isolierung der Stromschiene und Isolierkörper.
Bei dem Spannelement kann es sich insbesondere um eine Druckfeder handeln, die sich an einem fest mit der Stromschiene verbundenen Gegenlager abstützt. Das Gegenlager kann an der Außenseite der Stromschiene angeordnet und bspw. mit der Isolierung des Stromleiters verklebt sein.
Die Stromschienenbuchse ist vorzugsweise zur Aufnahme eines Kabelsteckteils gemäß DIN EN 50181 ausgestaltet. Insbesondere sind also die Kontaktbuchse sowie die Öffnung in dem Isolierkörper an ein normgemäßes Kabelsteckteil angepasst.
Es ist bevorzugt, wenn der Isolierkörper der Stromschiene mit einer elektrisch leitfähigen Oberfläche versehen ist. Eine entsprechende elektrisch leitfähige Oberfläche bietet Schutz vor elektrischem Schlag. Die elektrisch leitfähige Oberfläche kann insbesondere durch einen Oberflächenbeschichtungstechnik wie vorzugsweise Flammspritzen aufgebracht werden.
An einem Ende des Stromleiters, an dem keine Stromschienenbuchse angeordnet ist, kann ein beliebiger kundenseitig spezifizierter Anschluss vorgesehen sein.
Die Erfindung wird nun anhand einer vorteilhaften Ausführungsform unter Bezugnahme auf die beigefügten Zeichnungen beispielhaft beschrieben. Es zeigen:
- Figur 1:: ein erstes Ausführungsbeispiel einer Anordnung von drei erfindungsgemäßen Stromschienen mit jeweils einer Stromschienenbuchse;
- Figur 2:: eine Schnittansicht einer Stromschienenbuchse aus Figur 1; und
- Figur 3:: eine Frontalansicht der Stromschienenbuchse aus Figur 2.

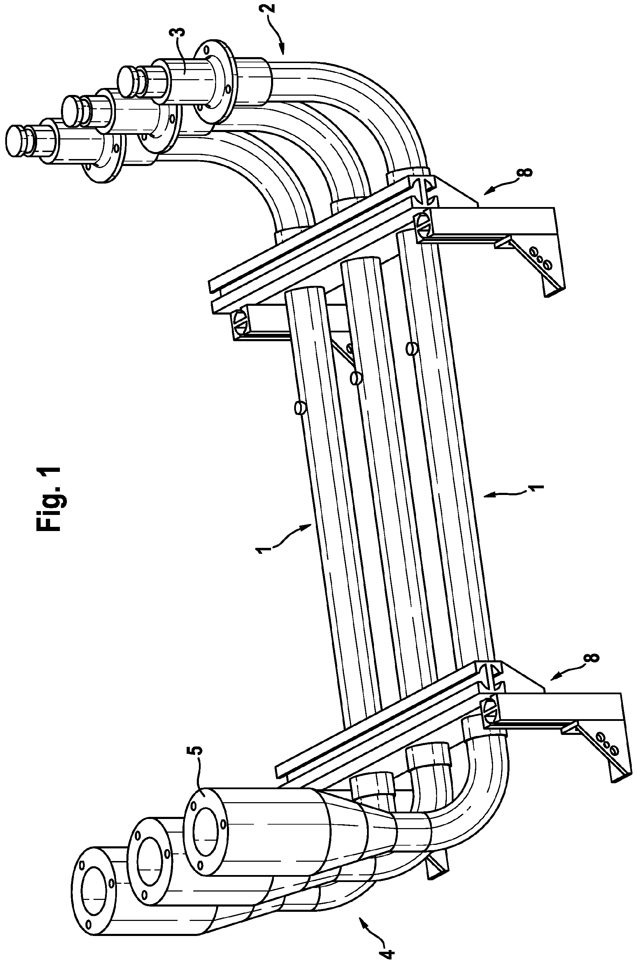

In Figur 1 ist ein erstes Ausführungsbeispiel einer Anordnung von drei erfindungsgemäßen Stromschienen 1 gezeigt. Die Stromschienen 1 sind jeweils für Spannungen von 1 kV bis 36 kV und Stromstärken bis 2,5 kA ausgelegt.

An ihrem einen Ende 2 weisen die Stromschienen 1 jeweils ein Anschlusssteckteil 3 auf, welches vergleichbar einem Kabelsteckteil gemäß DIN EN 50181 ausgestaltet ist. Die Anschlusssteckteile 3 können bspw. in geeignete Anschlussbuchsen einer Komponente einer Umspannungs- oder Schaltanlage (nicht dargestellt) eingeführt werden.

An ihrem jeweils anderen Ende 4 weisen die Stromschienen 1 Stromschienenbuchsen 5 auf. In diese Stromschienenbuchsen 5 können geeignete Kabel mit Kabelsteckteil gemäß DIN EN 50181 eingeführt werden.

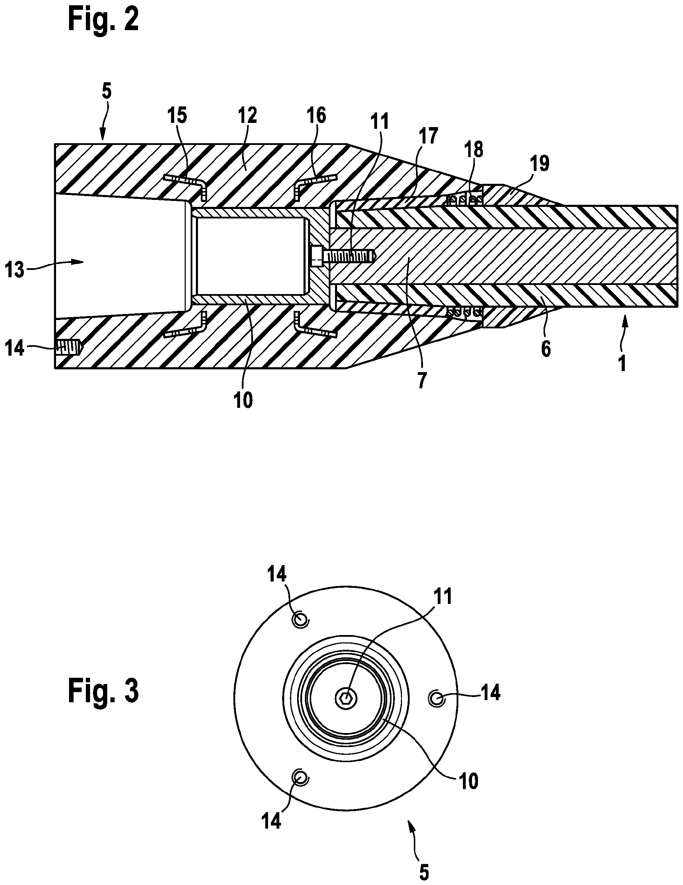

Die Stromschiene 1 umfasst einen von einer Isolierung 6 umgebenen starren Stromleiter 7 (vgl. Figur 2). Die Stromschiene 1 lässt sich daher in die in Figur 1 gezeigte Form bringen (bspw. durch Biegen), verformt sich aber bei üblichen Belastungen - bspw. dem Einstecken von Kabelsteckteilen in die Stromschienenbuchsen 5 - im Wesentlichen weder elastisch noch plastisch. Es ist daher ausreichend, die Stromschienen 1 mit den in Figur 1 gezeigten Befestigungsmitteln 8 zu befestigen. Insbesondere ist es nicht erforderlich, gesonderte Befestigungselemente für die Stützung der Stromschienenbuchsen 5 vorzusehen. Diese werden allein durch die starren Stromleiter 7 der Stromschienen 1 in Position gehalten.

Der Aufbau einer Stromschienenbuchse 5 wird nun anhand von Figuren 2 und 3 näher erläutert.

Die Stromschienenbuchse 5 umfasst eine einseitig offene Kontaktbuchse 10 zur Aufnahme eines Kontaktkopfes eines Kabelsteckteils gemäß DIN EN 50181 (nicht dargestellt). Die elektrisch leitfähige Kontaktbuchse 10 ist durch eine in ein Innengewinde eines Sacklochs an der Stirnseite des Stromleiters 7 der Stromschiene 1 eingreifende Schraube 11 fest mit der Stromschiene 1 verbunden, wobei sich auch ein großflächiger Kontakt zwischen der Stirnseite des Stromleiters 7 und der Kontaktbuchse 10 ergibt.

Die Kontaktbuchse 10 ist von einem Isolierkörper 12 umgeben, der eine Öffnung 13 zum Einführen des Kontaktkopfes des Kabelsteckteils in die Kontaktbuchse 10 aufweist. Neben der Öffnung 13 sind weiterhin Sacklöcher 14 mit Innengewinde vorgesehen, in die Schrauben zur Sicherung eines eingeführten Kabelsteckteils an der Stromschienenbuchse 5 eingreifen können. An der von der Öffnung 13 gegenüberliegenden Seite überlappt der Isolierkörper 12 mit der Isolierung 6 des Stromleiters 7 der Stromschiene 1 in axialer Richtung.

Der Isolierkörper 12 ist aus Gießharz gefertigt, wobei die Kontaktbuchse 10 derart mit dem Gießharz umgossen wurde, dass eine unlösbare und lufteinschlussfreie Verbindung zwischen Isolierkörper 12 und Kontaktbuchse 10 besteht.

In den Isolierkörper 12 mit eingegossen sind weiterhin zwei Feldsteuerelemente 15, 16, die beide elektrisch leitend mit der Kontaktbuchse 10 verbunden sind. Das eine Feldsteuerelement 15 umgibt das offene Ende der Kontaktbuchse 10 derart radial, dass es dieses Ende der Kontaktbuchse 10 in axialer Richtung überragt. Das andere Feldsteuerelement 16 umgibt die Kontaktbuchse 10 derart, dass es den Übergang von der Kontaktbuchse 10 zum Stromleiter 7 der Stromschiene 1 in axialer Richtung überragt.

Zwischen der Isolierung 6 der Stromschiene 1 und dem Isolierkörper 12 ist ein flexibler Isoliereinsatz 17 vorgesehen, der von einer Druckfeder als Spannelement 18 derart unter Druck gesetzt ist, dass Lufteinschlüsse zwischen Isolierung 6 der Stromschiene 1 und Isoliereinsatz 17 sowie zwischen Isolierkörper 12 und Isoliereinsatz 17 verhindert werden und so eine Edelfuge zwischen der Isolierung 6 der Stromschiene 1 und dem Isolierkörper 12 gebildet wird. Das Spannelement 18 drückt sich dabei an einem fest mit der Isolierung 6 der Stromschiene 1 verbundenen Gegenlager 19 ab.

## Patentansprüche

1. Stromschiene (1) zur Verlegung von nur schwer erreichbare Anschlüsse an Komponenten von Umspannungs- oder Schaltanlagen in besser erreichbare Bereiche für Spannungen von 1 kV bis 36 kV und Stromstärken bis 2,5 kA umfassend einen von einer Isolierung (6) umgebenen starren Stromleiter (7) mit einem ersten und einem zweiten Ende (2, 4), wobei an wenigstens einem der beiden Enden (2, 4) der Stromleiter (7) eine Stromschienenbuchse (5) vorgesehen ist, die eine fest mit dem Stromleiter (7) verbundene einseitig offene Kontaktbuchse (10) zur Aufnahme eines Kontaktkopfes eines Kabelsteckteils und einen die Kontaktbuchse (10) umgebenden Isolierkörper (12) umfasst, wobei der Isolierkörper (12) eine Öffnung (13) zum Einführen des Kontaktkopfes des Kabelsteckteils in die Kontaktbuchse aufweist und in axialer Richtung des Stromleiters (7) mit dessen Isolierung (6) überlappend ist, wobei zwischen der Isolierung (6) des Stromleiter (7) und dem Isolierkörper (12) ein flexibler Isoliereinsatz (17) vorgesehen ist, der von einem Spannelement (18) derart unter Druck gesetzt ist, dass Lufteinschlüsse zwischen Isolierung (6) des Stromleiters (7) und Isoliereinsatz (17) sowie zwischen Isolierkörper (12) und Isoliereinsatz (17) vermieden werden.

2. Stromschiene nach Anspruch 1,
**dadurch gekennzeichnet, dass**
die Stromschienenbuchse (5) durch eine Verschraubung mit wenigstens einer Schraube (11) oder wenigstens einem Bolzen fest mit der Stromschiene (1) verbunden ist.

3. Stromschiene nach einem der vorhergehenden Ansprüche,
**dadurch gekennzeichnet, dass**
der Isolierkörper (12) der Stromschienenbuchse (5) aus Gießharz gefertigt ist, wobei vorzugsweise die Kontaktbuchse (10) mit dem Gießharz des Isolierkörpers (12) derart umgossen ist, dass eine unlösbare und lufteinschlussfreie Verbindung zwischen Isolierkörper (12) und Kontaktbuchse (10) besteht.

4. Stromschiene nach einem der vorhergehenden Ansprüche,
**dadurch gekennzeichnet, dass**
die Stromschienenbuchse (5) wenigstens ein Feldsteuerelement (15, 16) umfasst, welches mit der Kontaktbuchse (10) elektrisch leitend verbunden ist, wobei ein Feldsteuerelement (15) vorzugsweise das offene Ende der Kontaktbuchse (10) derart radial umgibt, dass es das offene Ende der Kontaktbuchse (10) in axialer Richtung überragt.

5. Stromschiene nach einem der vorhergehenden Ansprüche,
**dadurch gekennzeichnet, dass**
das Spannelement (18) eine Druckfeder ist, die sich vorzugsweise an einem fest mit der Stromschiene (1) verbundenen Gegenlager (19) abstützt.

6. Stromschiene nach einem der vorhergehenden Ansprüche,
**dadurch gekennzeichnet, dass**
die Stromschienenbuchse (5) zur Aufnahme eines Kabelsteckteils gemäß DIN EN 50181 ausgebildet ist.

7. Stromschiene nach einem der vorhergehenden Ansprüche,
**dadurch gekennzeichnet, dass** der Isolierkörper (12) zum Schutz vor elektrischem Schlag mit einer elektrisch leitfähigen Oberfläche versehen ist.

8. Stromschiene nach Anspruch 7, **dadurch gekennzeichnet, dass**
die elektrisch leitfähige Oberfläche durch eine Oberflächenbeschichtungstechnik wie Flammspritzen aufgebracht ist.

9. Stromschiene nach einem der vorhergehenden Ansprüche, **dadurch gekennzeichnet, dass** an einem Ende (4, 2) des Stromleiters (7), an dem keine Stromschienenbuchse (5) angeordnet ist, ein beliebiger kundenseitig spezifizierter Anschluss vorgesehen ist.

## Claims

1. Busbar (1) for fitting connections to components of voltage conversion or switchgear assemblies, which connections can be reached only with difficulty, in areas for voltages of 1 kV to 36 kV and current intensities of 2.5 kA, which areas can be reached better, comprising a rigid current conductor (7), which is surrounded by an insulation (6) and has a first and a second end (2, 4), wherein a busbar socket (5) is provided at at least one of the two ends (2, 4) of the current conductors (7), which busbar socket comprises a contact socket (10), which is fixedly connected to the current conductor (7), is open on one side and serves for holding a contact head of a cable plug-in part, and an insulating body (12) surrounding the contact socket (10), wherein the insulating body (12) has an opening (13) for insertion of the contact head of the cable plug-in part into the contact socket and, in the axial direction of the current conductor (7), is overlapping with the insulation (6) thereof, wherein a flexible insulating insert (17) is provided between the insulation (6) of the current conductor (7) and the insulating body (12), which insulating insert is pressurized by a tensioning element (18) in such a way that air pockets between the insulation (6) of the current conductor (7) and the insulating insert (17) as well as between the insulating body (12) and the insulating insert (17) are prevented.

2. Busbar according to Claim 1, **characterized in that** the busbar socket (5) is fixedly connected to the busbar (1) by screwing using at least one screw (11) or at least one bolt.

3. Busbar according to either of the preceding claims, **characterized in that** the insulating body (12) of the busbar socket (5) is made of cast resin, wherein the contact socket (10) is preferably encapsulated with the cast resin of the insulating body (12) in such a way that a non-releasable and air-pocket-free connection between the insulating body (12) and the contact socket (10) is produced.

4. Busbar according to one of the preceding claims, **characterized in that** the busbar socket (5) comprises at least one field control element (15, 16), which is electrically conductively connected to the contact socket (10), wherein a field control element (15) preferably radially surrounds the open end of the contact socket (10) in such a way that said field control element projects above the open end of the contact socket (10) in the axial direction.

5. Busbar according to one of the preceding claims, **characterized in that** the tensioning element (18) is a compression spring, which is preferably supported against a mating bearing (19), which is fixedly connected to the busbar (1).

6. Busbar according to one of the preceding claims, **characterized in that** the busbar socket (5) is configured to hold a cable plug-in part according to DIN EN 50181.

7. Busbar according to one of the preceding claims, **characterized in that** the insulating body (12) is provided with an electrically conductive surface to protect against electric shock.

8. Busbar according to Claim 7, **characterized in that** the electrically conductive surface is applied by a surface coating technique such as flame spraying.

9. Busbar according to one of the preceding claims, **characterized in that** any connection specified by the customer is provided at an end (4, 2) of the current conductor (7) at which no busbar socket (5) is arranged.

## Revendications

1. Barre omnibus (1) destinée seulement au transfert de connexions difficiles à atteindre à des composants d'installations de transformation ou de distribution dans des zones plus faciles à atteindre pour des tensions comprises entre 1 kV et 36 kV et des intensités de courant pouvant atteindre 2,5 kA comprenant un conducteur de courant (7) rigide entouré d'une isolation (6) comportant une première et une deuxième extrémité (2, 4), le conducteur de courant (7) étant équipé à au moins une des deux extrémités (2, 4) d'une douille (5) de barre omnibus qui comprend une douille de contact (10) ouverte d'un côté fixée au conducteur de courant (7) destinée au logement d'une tête de contact d'une pièce d'enfichage de câble et un corps isolant (12) entourant la douille de contact (10), le corps isolant (12) comportant une ouverture (13) destinée à introduire la tête de contact de la pièce d'enfichage de câble dans la douille de contact et se superposant dans la direction axiale du conducteur de courant (7) avec l'isolation (6) de ce dernier, un insert (17) isolant flexible, qui est comprimé par un élément de serrage (18) de telle sorte que les vides entre l'isolation (6) du conducteur de courant (7) et l'insert (17) isolant ainsi qu'entre le corps isolant (12) et l'insert (17) isolant sont évités, étant disposé entre l'isolation (6) du conducteur de courant (7) et le corps isolant (12).

2. Barre omnibus (1) selon la revendication 1, **caractérisée en ce que** la douille (5) de barre omnibus est fixée à la barre omnibus (1) par un raccord fileté pourvu d'au moins une vis (11) ou d'au moins un boulon.

3. Barre omnibus selon l'une quelconque des revendications précédentes, **caractérisée en ce que** le corps isolant (12) de la douille (5) de barre omnibus est fabriqué à partir de résine de coulée, la douille de contact (10) étant fondue avec la résine de coulée du corps isolant (12) de telle sorte qu'une liaison indissoluble et dépourvue de vides est réalisée entre le corps isolant (12) et la douille de contact (10).

4. Barre omnibus selon l'une quelconque des revendications précédentes, **caractérisée en ce que** la douille (5) de barre omnibus comprend au moins un élément régulateur de champ (15, 16), lequel est relié en conduction électrique à la douille de contact (10), un élément régulateur de champ (15) entourant radialement de préférence l'extrémité ouverte de la douille de contact (10) de telle sorte qu'il surmonte l'extrémité ouverte de la douille de contact (10) dans la direction axiale.

5. Barre omnibus selon l'une quelconque des revendications précédentes, **caractérisée en ce que** l'élément de serrage (18) est un ressort à pression qui bute de préférence contre un contre-appui (19) relié à la barre omnibus (1).

6. Barre omnibus selon l'une quelconque des revendications précédentes, **caractérisée en ce que** la douille (5) de barre omnibus est conçue pour le logement d'une pièce d'enfichage de câble selon la norme DIN EN 50181.

7. Barre omnibus selon l'une quelconque des revendications précédentes, **caractérisée en ce que** le corps isolant (12) est pourvu d'une surface électriquement conductrice pour la protection contre les décharges électriques.

8. Barre omnibus selon la revendication 7, **caractérisée en ce que** la surface électriquement conductrice est appliquée par une technique de revêtement de surface de type projection à la flamme.

9. Barre omnibus selon l'une quelconque des revendications précédentes, **caractérisée en ce que**, à une extrémité (4, 2) du conducteur de courant (7) à laquelle aucune douille (5) de barre omnibus n'est agencée, n'importe quelle connexion spécifiée par le client est disposée.
